(19) Europäisches Patentamt / European Patent Office / Office européen des brevets

(11) **EP 3 133 180 A1**

(12) **EUROPEAN PATENT APPLICATION**
published in accordance with Art. 153(4) EPC

(43) Date of publication:
**22.02.2017 Bulletin 2017/08**

(21) Application number: **15779839.8**

(22) Date of filing: **09.04.2015**

(51) Int Cl.:
*C22C 38/00* (2006.01)       *B23K 9/23* (2006.01)
*B23K 35/30* (2006.01)       *C22C 38/32* (2006.01)
*C22C 38/22* (2006.01)

(86) International application number:
**PCT/JP2015/061151**

(87) International publication number:
**WO 2015/159806 (22.10.2015 Gazette 2015/42)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA**

(30) Priority: **17.04.2014 JP 2014085791**

(71) Applicant: **Kabushiki Kaisha Kobe Seiko Sho
(Kobe Steel, Ltd.)
Kobe-shi, Hyogo 651-8585 (JP)**

(72) Inventors:
• **OKAZAKI, Yoshitomi**
  **Hyogo 651-2271 (JP)**
• **NAKO, Hidenori**
  **Tokyo 141-8688 (JP)**
• **YAMASHITA, Ken**
  **Kanagawa 251-8551 (JP)**
• **IKAI, Kazuya**
  **Kanagawa 251-8551 (JP)**

(74) Representative: **Müller-Boré & Partner
Patentanwälte PartG mbB
Friedenheimer Brücke 21
80639 München (DE)**

(54) **WELDED METAL HAVING EXCELLENT STRENGTH, TOUGHNESS AND SR CRACKING RESISTANCE**

(57)     The present invention provides a weld metal that exhibits excellent strength and toughness as well as excellent SR cracking resistance that can prevent SR cracking not only at a high temperature of about 690°C but also at around 600°C, at which temperature SR cracking tends to occur. The weld metal of the present invention includes, C: 0.06 to 0.10%, Si: 0.4 to 0.6%, Mn: 0.5 to 1.0%, Cr: 1.8 to 3.0%, Mo: 0.8 to 1.2%, Ti: 0.02 to 0.08%, B: 0.002% or less (including 0%), N: 0.005 to 0.01%, and O: 0.03 to 0.07%, with the balance being iron and inevitable impurities, wherein the weld metal satisfies the following inequality expression (1):

$$3.0 \leq 13 \times [C] + [Cr] + 160 \times [B] \leq 4.0 \qquad (1)$$

where [C] is a C content, [Cr] is a Cr content, and [B] is a B content.

EP 3 133 180 A1

**Description**

Technical Field

The present invention relates to weld metal having excellent strength, toughness, and stress relief (hereinafter abbreviated to "SR") cracking resistance that suppresses intergranular cracking in annealing for SR.

Background Art

Cr-Mo steel and its weld metal parts are used for boilers, chemical reaction containers, and the like in high-temperature and high-voltage environments. Thus, the Cr-Mo steel and these parts are required to demonstrate excellent properties, such as strength and toughness, and excellent SR cracking resistance.

Especially, in recent years, as equipment size increases, thicker steel plates have been used. Meanwhile, the heat input during welding tends to be increased to prevent reductions in operational efficiency. Therefore, in place of a coated electrode, the application of a flux-cored wire capable of achieving efficient welding is desired. However, using the flux-cored wire causes various problems, including high oxygen amounts in weld metal, degradation in toughness, and further multiple occurrence of SR cracking.

For this reason, a variety of techniques are proposed to provide weld metal with excellent strength, toughness and SR cracking resistance.

For example, Patent Document 1 discloses that among carbides precipitated in prior austenite grains, the amount of fine MC type carbide, such as TiC, is decreased. At the same time, the amount of fine $M_2C$ type carbide, containing Ti, is increased, thereby enabling the production of a Cr-Mo based steel weld metal that has improved toughness and tensile strength as well as excellent SR cracking resistance.

Patent Document 2 discloses that when a predetermined number of precipitates containing a combined total of 50% or more of Cr and Mo elements exists in a weld metal, the movement of grain boundaries in an SR treatment is pinned, which suppresses ferrite band formation. Consequently, the weld metal is less likely to generate a ferrite band even after sustained subjection to the high-temperature SR treatment for a long time, and thus such a weld metal exhibits sufficient toughness.

Prior Art Document

Patent Document

   Patent Document 1: JP 2007-290016 A
   Patent Document 2: JP 3842707 B2

Disclosure of the Invention

Problems to be Solved by the Invention

Various techniques proposed for preventing the degradation in toughness and SR cracking, as mentioned above, require further improvement. The patent documents mentioned above evaluate an SR cracking resistance at a high temperature. For example, in the technique disclosed in Patent Document 1, an SR treatment is performed at 690°C for one hour, whereas in the technique disclosed in Patent Document 2, an SR treatment is performed at 690°C for 9.5 hours, or at 690°C for 15.3 hours. However, SR cracking tends to occur when the weld metal is exposed for a long time at around 600°C (in a range of approximately 600 to 650°C), which is lower than the above-mentioned temperature. For this reason, a weld metal is desired that has excellent SR cracking resistance not only at a high temperature of about 690°C (appropriately in a range of 650 to 700°C), but also at a lower temperature of about 600°C at which temperature SR cracking tends to occur.

Furthermore, considering welding efficiency, a technique is necessary for improving the aforesaid properties of weld metal formed by a gas shield arc welding method, among welding methods. Particularly, with regard to weldability, the technique is desirable for improving the aforesaid properties of weld metal formed by the gas shield arc welding method using a flux-cored wire (powder of minerals). Wires used in the gas shield arc welding are mainly classified into flux-cored wires and solid wires. The flux-cored wire has various advantages, including fewer spatters when compared to the solid wire, and good weldability not only in a flat position but also in a vertical position and an overhead position.

The present invention has been made in view of the foregoing circumstances, and it is an object of the present invention to provide a weld metal that exhibits excellent strength and toughness as well as excellent SR cracking resistance that can prevent SR cracking not only at a high temperature of about 690°C but also at around 600°C, at which temperature SR cracking tends to occur.

Means for Solving the Problems

A weld metal according to the present invention that can solve the above-mentioned problems includes, in percent by mass, C: 0.06 to 0.10%, Si: 0.4 to 0.6%, Mn: 0.5 to 1.0%, Cr: 1.8 to 3.0%, Mo: 0.8 to 1.2%, Ti: 0.02 to 0.08%, B: 0.002% or less (including 0%), N: 0.005 to 0.01%, and O: 0.03 to 0.07%, with the balance being iron and inevitable impurities, wherein the weld metal satisfies the following inequality expression (1):

$$3.0 \leq 13 \times [C] + [Cr] + 160 \times [B] \leq 4.0 \qquad (1)$$

where [C] is a C content, [Cr] is a Cr content and [B] is a B content.

In a preferred embodiment of the present invention, the weld metal further includes, in limited contents in percent by mass, P: 0.01% or less (excluding 0%), and S: 0.010% or less (excluding 0%) .

In another preferred embodiment of the present invention, the weld metal further includes, in percent by mass, at least one element selected from the group consisting of: Nb: 0.03% or less (excluding 0%), and V: 0.03% or less (excluding 0%).

The present invention also includes a welded structure including any one of the above-mentioned weld metal.

Effects of the Invention

The invention controls the amounts of C, Cr, and B in a well-balanced manner, which affect the formation of carbides precipitated in the prior austenite grain boundary. Thus, the size of the carbide is appropriately controlled to produce a weld metal made of a Cr-Mo based steel with excellent strength, low-temperature toughness and SR cracking resistance. In particular, the present invention is very useful because it can prevent the occurrence of SR cracking not only under a high temperature of around 690°C, but also under a temperature of around 600°C at which SR cracking is more likely to occur.

Brief Description of Drawings

Fig. 1 is a cross-sectional view showing the shape of a groove in a steel plate used in Examples.
Fig. 2 is a cross-sectional view showing a measurement position of a chemical component of a weld metal in Examples.
Fig. 3 is a cross-sectional view showing an extraction position of a tensile specimen of the weld metal in Examples.
Fig. 4 is a cross-sectional view showing an extraction position of a Charpy impact specimen of the weld metal in Examples.
Fig. 5A is a cross-sectional view showing an extraction position of a ring-cracking specimen used for the evaluation of the SR cracking resistance in Examples.
Fig. 5B is a cross-sectional view showing the shape of the ring-cracking specimen used for the evaluation of the SR cracking resistance in Examples.
Fig. 5C is a cross-sectional view showing a TIG welded part in the ring-cracking specimen used for the evaluation of the SR cracking resistance in Examples.
Fig. 5D is a diagram showing observed surfaces of the SR cracking in Examples.

Mode for Carrying Out the Invention

The inventors have further studied to achieve the above-mentioned object after proposing Patent Document mentioned above. Specifically, in the present invention, the inventors have studied to provide a technique capable of preventing the occurrence of SR cracking at around 600°C, which is not sufficiently considered in Patent Document 1.

As disclosed in Patent Document 1, the SR cracking is caused mainly by a difference between an intragranular strength of the prior austenite and an intergranular strength of the prior austenite. In the above Patent Document 1, experiments were performed by focusing on carbides precipitated in the prior austenite grains. In contrast, the present invention has examined in detail the relationship with the SR cracking resistance by focusing on carbides precipitated in the prior austenite grain boundaries. As a result, the SR cracking is found to be caused by coarse carbides precipitated in the prior austenite grain boundaries.

This point will be described in a little bit more detail. As is known in the related art, when a weld metal made of a Cr-Mo steel is subjected to the SR treatment, a carbide (MC) mainly containing Ti, Nb and V as well as a fine carbide ($M_2C$) mainly containing Mo etc., are normally precipitated finely in the prior-austenite grains. Thus, grain distribution strengthening mechanism of these precipitates inevitably enhances the intragranular strength, resulting in a relative decrease in the intergranular strength.

The inventors have studied a technique that reduces a difference between the intragranular and intergranular strengths of the prior austenite while keeping a certain level of the intergranular strength of the prior austenite. Based on the result of studies, it is found that the size of coarse carbides precipitated in the prior austenite grain boundary should be reduced to prevent SR cracking. To this aim, it is revealed that, regarding the elements C, Cr and B affecting the formation of the coarse carbides, not only the amount of each of C, Cr and B is controlled individually, but also a value determined by the amounts of C, Cr and B is controlled to be within a range represented by the inequality expression (1) mentioned above, making it possible to prevent the SR cracking at around 600°C as well as 690°C.

Further, the SR cracking is found to be caused also by impurities that are segregated in the prior austenite grain boundary to embrittle the grain boundary. For this reason, the present invention is preferably adapted to limit the amounts of P and S to predetermined levels or less.

That is, the weld metal of the present invention is characterized by having the following structure.

(i) C: 0.06 to 0.10%, Si: 0.4 to 0.6%, Mn: 0.5 to 1.0%, Cr: 1.8 to 3.0%, Mo: 0.8 to 1.2%, Ti: 0.02 to 0.08%, B: 0.002% or less (including 0%), N: 0.005 to 0.01% and O: 0.03 to 0.07%, with the balance being iron and inevitable impurities, wherein the weld metal satisfies the following inequality expression (1):

$$3.0 \leq 13 \times [C] + [Cr] + 160 \times [B] \leq 4.0 \qquad (1)$$

where [C] is a C content, [Cr] is a Cr content and [B] is a B content.

(ii) Preferably, the weld metal of the present invention further includes, in limited contents, P: 0.01% or less (excluding 0%), and S: 0.010% or less (excluding 0%), or further, includes at least one element selected from the group consisting of: Nb: 0.03% or less (excluding 0%) and V: 0.03% or less (excluding 0%).

(Weld metal of the Invention)

The respective components of the weld metal will be described below.

C: 0.06 to 0.10%

Carbon (C) is an element essential to ensure the strength and toughness of a weld metal. Furthermore, C is the element that is useful to ensure the intergranular strength of the prior austenite. To effectively exhibit these effects, the lower limit of C content is 0.06% or more. The C content is preferably set at 0.07% or more, and more preferably 0.075% or more. Any excessive C content increases the amount of hard microstructures, such as martensite, degrading the toughness of the weld metal. Thus, the upper limit of C content is set at 0.10% or less. The C content is preferably 0.09% or less, and more preferably 0.08% or less.

Si: 0.4 to 0.6%

Silicon (Si) is an element that cleans a weld metal by a deoxidation effect and causes solid-solution strengthening when a large amount of Si is yielded in the weld metal, thereby contributing to improving the strength of the weld metal. Si has the effect of delaying the growth speed of carbides precipitated in the prior austenite grain boundaries, and is effective in improving the toughness and SR cracking resistance of the weld metal. To effectively exhibit these effects, the lower limit of Si content is 0.4% or more. The Si content is preferably 0.41% or more, and more preferably 0.42% or more. Note that any excessive Si content locally generates coarse carbides in the prior austenite grain boundary, contributing to intergranular embrittlement together with segregation of impurities, thus degrading the SR cracking resistance. Any excessive Si content increases the amount of hard microstructures, such as martensite, degrading the toughness of the weld metal. Thus, the upper limit of the Si content is 0.6% or less. The Si content is preferably 0.5% or less, and more preferably 0.48% or less.

Mn: 0.5 to 1.0%

Manganese (Mn) is an element essential to ensure the strength and toughness of a weld metal. To effectively exhibit these effects, the lower limit of Mn content is set at 0.5% or more. The Mn content is preferably 0.6% or more, and more preferably 0.7% or more. Note that any excessive addition of Mn promotes the intergranular embrittlement due to the segregation of impurities while enhancing the hardenability of the weld metal. Thus, the upper limit of Mn content is set at 1.0% or less. The Mn content is preferably 0.95% or less, and more preferably 0.9% or less.

Cr: 1.8 to 3.0%

Chromium (Cr) is one fundamental component of a Cr-Mo based heat-resistant steel and is useful for ensuring the strength of the weld metal at a high temperature. To effectively exhibit these effects, the lower limit of Cr content is set at 1.8% or more. The Cr content is preferably set at 2.0% or more, and more preferably 2.1% or more. Note that any excessive addition of Cr induces an increase in amount of coarse carbides precipitated in the prior austenite grain boundaries, and cannot ensure the amount of C which is useful for improving the intergranular strength due to the segregation at the prior austenite grain boundaries, thereby degrading the SR cracking resistance. Thus, the upper limit of Cr content is set at 3.0% or less. The Cr content is preferably 2.8% or less, and more preferably 2.5% or less.

Mo: 0.8 to 1.2%

Molybdenum (Mo), like Cr, is one fundamental component of the Cr-Mo based heat-resistant steel and contributes to ensuring the strength of the weld metal. To effectively exhibit such an effect, the lower limit of Mo content is 0.8% or more. The Mo content is preferably 0.85% or more, and more preferably 0.9% or more. Note that any excessive Mo content degrades the toughness of the weld metal due to the formation of fine precipitates $M_2C$ precipitated in the prior austenite grain boundary, while enhancing the hardenability of the weld metal. Thus, the upper limit of Mo content is set at 1.2% or less. The Mo content is preferably 1.1% or less, and more preferably 1.0% or less.

Ti: 0.02 to 0.08%

Titanium (Ti) is an element that cleans a weld metal by a deoxidation effect and forms fine precipitates (MC, $M_2C$) precipitated in the prior austenite grains when a large amount of Ti is yielded in the weld metal, thereby contributing to improving the strength of the weld metal. To effectively exhibit these effects, the lower limit of Ti content is set at 0.02% or more. The Ti content is preferably 0.03% or more, and more preferably 0.04% or more. Note that any excessive addition of Ti induces an excessive increase in the strength of the weld metal due to the increased amount of MC, reducing the toughness thereof, facilitating the occurrence of SR cracking. Thus, the upper limit of Ti content is set at 0.08% or less. The Ti content is preferably 0.075% or less, and more preferably 0.07% or less.

B: 0.002% or less (including 0%)

Boron (B) is an element that is segregated in the prior austenite grain boundaries during welding, thus affecting the formation of coarse carbides and the segregation of any element other than B in the prior austenite grain boundary. Any excessive addition of B facilitates the formation of coarse carbides precipitated in the prior austenite grain boundaries, and cannot ensure the amount of C segregated in the prior austenite grain boundaries, whereby the above-mentioned effects by the addition of C cannot be efficiently exhibited. Therefore, the upper limit of B content should be 0.002% or less. The B content is preferably reduced as much as possible, preferably 0.0015% or less, and more preferably 0.0010% or less.

N: 0.005 to 0.01%

Nitrogen (N) is an element that is solid-soluted into fine precipitates (MC, $M_2C$) precipitated in the prior austenite, thereby contributing to ensuring the toughness of the weld metal. To effectively exhibit these effects, the lower limit of N content is set at 0.005% or more. The N content is preferably 0.006% or more, and more preferably 0.0065% or more. Note that any excessive addition of N induces an excessive increase in the strength of the weld metal, reducing the toughness thereof. Thus, the upper limit of N content is set at 0.01% or less. The N content is preferably 0.009% or less, and more preferably 0.008% or less.

O: 0.03 to 0.07%

Oxygen (O) is an element that forms an oxide, contributing to improving the toughness of a weld metal by making the microstructure of the weld metal finer. To effectively exhibit these effects, the lower limit of O content is set at 0.03% or more. The O content is preferably 0.04% or more, and more preferably 0.045% or more. Note that any excessive addition of O consumes a large amount of alloy elements as oxides, whereby the toughness of the weld metal is reduced. Thus, the upper limit of O content is 0.07% or less. The O content is preferably 0.06% or less, and more preferably 0.055% or less.

The weld metal of the present invention basically contains the above-mentioned components with the balance being iron and inevitable impurities.

$$3.0 \leq 13 \times [C] + [Cr] + 160 \times [B] \leq 4.0 \qquad (1)$$

where [C] is a C content, [Cr] is a Cr content and [B] is a B content.

Furthermore, in the present invention, an r value represented by "13 x [C] + [Cr] + 160 x [B]" as mentioned above needs to be within the range specified by inequality expression (1) above. The aforesaid r value is set by the inventors as a parameter that can prevent both the SR cracking at a high temperature of around 690°C and the SR cracking at a temperature of around 600°C, at which temperature SR cracking is more likely to occur. The basic experiments by the inventors show that any one of C, Cr and B configuring the above-mentioned r value is an element affecting carbides formed in the prior austenite grain boundary. For this reason, the addition of these elements with good balance therebetween can appropriately control the size of the carbide precipitated in the prior austenite grain boundary. As a result of many additional experiments, the above-mentioned inequality expression (1) has been derived. As shown in Examples to be mentioned later, the control of only the contents of the respective components included in the weld metal cannot obtain the desired SR cracking resistance. In addition to the appropriate control of each component content, the r value is controlled appropriately, whereby the desired SR cracking resistance is obtained.

When the lower limit of the above-mentioned r value is below 3.0, the SR cracking resistance is degraded. The r value is preferably 3.1 or more, and more preferably, 3.2 or more. On the other hand, when the r value exceeds 4.0, the amount and size of the carbide precipitated in the prior austenite grain boundary are increased, degrading the SR cracking resistance and toughness of the weld metal in some cases. The upper limit of the r value mentioned above is preferably 3.9 or less, and more preferably 3.8 or less.

In the present invention, to prevent the SR cracking and the reduction in toughness more efficiently, the following components are preferably controlled further.

P: 0.01% or less by mass (excluding 0%)

Phosphorus (P) segregates as impurities in the prior austenite grain boundaries, facilitating the occurrence of SR cracking. Thus, the upper limit of the P content is preferably set at 0.01% or less. The smaller the P content is, the better the weld metal is. Accordingly, the P content is preferably 0.009% or less, and more preferably 0.008% or less.

S: 0.010% or less (excluding 0%)

Sulfur (S) segregates as impurities in the prior austenite grain boundaries, facilitating the occurrence of SR cracking. Thus, the upper limit of the S content is preferably set at 0.010% or less. The smaller the S content is, the better the weld metal is. Accordingly, the S content is preferably 0.009% or less, and more preferably 0.008% or less.

At least one element selected from Nb: 0.03% or less (excluding 0%) and V: 0.03% or less (excluding 0%)

Each of Nb and V increases the amount of fine carbides (MC) precipitated in the prior austenite grains, facilitating the occurrence of SR cracking. Thus, the upper limit of each of Nb and V is preferably 0.03% or less. Specifically, the upper limit of Nb is preferably 0.02% or less, and more preferably 0.015% or less. The upper limit of V content is preferably 0.025% or less, and more preferably 0.02% or less.

The weld metal of the present invention has been described above.

(Method for Manufacturing Weld metal)

A method for obtaining the above-mentioned weld metal will be described below.

The weld metal of the present invention is obtained by appropriately controlling welding conditions, including, for example, the composition of a base metal (steel material), the shape of a groove, the composition of a welding material (wire), a welding current, a welding voltage, a wire protruding length, and a welding method.

Regarding the welding method, in terms of the welding workability, practicality, and the like, preferably, a flux-cored wire is used, and the base metal (steel material) is welded by a gas shield arc welding. In the present invention, especially, Ti, N and B contained in the flux-cored wire are appropriately controlled, thereby producing the desired weld metal.

A preferable method for performing the gas shield arc welding using a flux-cored wire (Flux Cored Arc Welding, FCAW) will be described below. However, the present invention is not limited to this method. For example, the welding method suitable for use is any one of a shielded metal arc welding (SMAW), a tungsten inert gas (TIG) welding, a submerged arc welding (SAW), and a gas shield arc welding using a solid wire.

The preferable composition of the flux-cored wire used in the present invention changes depending on welding conditions, but is preferably controlled, for example, in the following way. That is, the composition of the flux-cored wire contains,

C: 0.07 to 0.12% (more preferably 0.08% or more and 0.10% or less), Si: 0.55 to 0.8% (more preferably 0.6% or more and 0.7% or less), Mn: 0. 5 to 1.2% (more preferably 0.7% or more and 1.1% or less), Cr: 1.9 to 3.0% (more preferably 2.0% or more and 2.8% or less), Mo: 0.8 to 1.2% (more preferably 0.9% or more and 1.0% or less), Ti: 0.02 to 0.15% (more preferably 0.04% or more and 0.12% or less), B: 0.002%orless (more preferably 0.001% or less), and N: 0.005 to 0.01% (more preferably 0.006% or more and 0.009% or less), with the balance being iron and inevitable impurities.

For the purpose of further enhancing the effect of preventing the occurrence of SR cracking, the above-mentioned wire is preferably controlled such that the r value represented by $13 \times [C] + [Cr] + 160 \times [B]$ exceeds 3.4 and 4.6 or less (more preferably 3.5 or more and 4.2 or less).

Moreover, for the purpose of further enhancing the effect of preventing the occurrence of SR cracking, the above-mentioned wire is preferably controlled to contain at least one element selected from the group consisting of Nb: 0.03% or less (more preferably 0.02% or less), and V: 0.03% or less (more preferably 0.02% or less).

From the same viewpoint as mentioned above, the wire is preferably controlled to contain: P: 0.01% or less (more preferably 0.008% or less) and S: 0.010% or less (more preferably 0.008% or less).

Furthermore, to appropriately control an O content of the weld metal, the content of a strong deoxidation element (such as Mg or Al) is preferably controlled to be within a range of 0.50 to 0.85% (more preferably 0.6 to 0.7%).

The flux-cored wire used in the present invention may contain, for example, Cu, Ni, Co, W, etc. as components other than the components mentioned above, within a range that does not lose the effects of the present invention, as appropriate, depending on the performance required by a subject to be welded (base material).

The composition of a flux is not particularly limited as long as it is a commonly used one. For example, the flux composition preferably contains rutile as a principal component.

A filling ratio of the flux in the flux-cored wire is not particularly limited and can be set as appropriate by taking into consideration the productivity of wires, for example, molds, disconnection of a wire in extension, and the like. The flux filling ratio is preferably set within a range of approximately 11.0 to 18.0%.

The cross-sectional shape of the wire is not particularly limited, and may or may not have, for example, a seam. When the wire has no seam at its cross-sectional shape, a Cu plating, a Ni plating or a composite plating thereof may be applied to the surface of the wire in order to improve the feedability of the wire.

A preferable composition of the steel material used in the present invention is not particularly limited as long as it is defined as a Cr-Mo based steel, and thus it can be, for example, ASTM A387-Gr.22 C1.2 (2.25Cr-0.5Mo based) and the like. In the present invention, the base metal for use preferably has substantially the same composition as that of the above-mentioned weld metal.

A method for a gas shield arc welding is not particularly limited and can be any method commonly used.

Shield gases suitable for use can include, in addition to 100%$CO_2$ gas, a mixed gas of Ar gas and $CO_2$ gas, a mixed gas of Ar gas and $O_2$ gas, and a mixed gas of three kinds of gases, namely, Ar gas, $CO_2$ gas and $O_2$ gas.

Examples

The present invention will be more specifically described below by way of Examples, but is not limited to the following Examples. Various modifications and changes can be made to these Examples as appropriate, as long as they are adaptable to the above-mentioned and below-mentioned concepts and are included within the technical scope of the present invention. In the following Examples, percentages are by mass unless otherwise specified.

Example 1

(Flux-cored Wire and Base Metal)

First, flux-cored wires W1 to W28 shown in Table 1 (all wires having a wire diameter of 1.2 mm) were prepared as wires. A filling ratio of the flux in each flux-cored wire was in a range of about 13 to 15%. Note that for Nb shown in Table 1, the Nb content in each of the wires except for wire W25 (Nb content = 0.039%) was so little that Nb could be defined as an impurity mixed in the wire. Likewise, the V content in each of the wires except for wire W26 (V content = 0.078%) was so little that V could be defined as an impurity mixed in the wire.

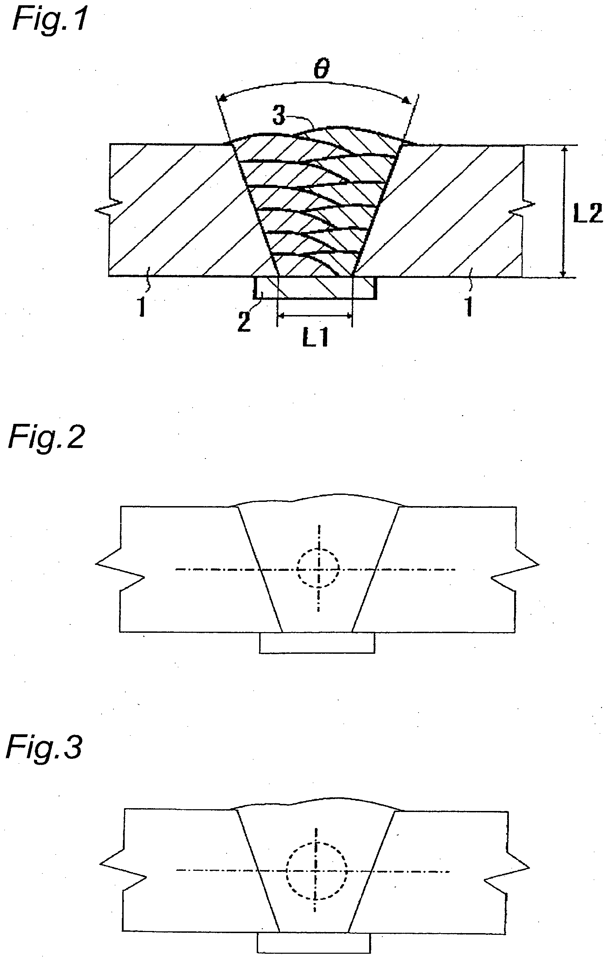

As a welding base metal, as shown in Fig. 1, a low-alloy heat-resistant steel plate 1 having a V-shaped groove with $\theta = 45°$ was prepared. The steel plate 1 had a thickness of 19 mm and a composition shown in Table 2. A backing metal 2 having the same chemical composition as the welding base metal was placed under the V-shaped groove, while a gap width (route gap) L1 of a part where the backing metal was placed was set at 13 mm.

(Welding Conditions)

The steel plate 1 was subjected to butt welding through a gas shield arc welding using the above-mentioned flux-cored wire. The detailed welding conditions were set as follows:

Welding Current: 270 A
Arc Voltage: 30 to 32 V
Welding Speed: 30 cm/min
Welding Position: Flat
Composition and Flow Rate of Shield Gas: $CO_2$ 100% 25 L/min Preheating and Interpass Temperatures: 17.5 $\pm$ 15°C
Lamination Method: 6 layers through 12 passes

(SR Treatment)

After the welding, in an SR annealing treatment, a heat treatment was performed at 690°C for one hour.

In detail, each sample obtained after the welding was heated. When the temperature of the sample exceeded 300°C, heating conditions were adjusted such that an average temperature increase rate was 55°C/h or lower, and the heating was then continued until the temperature of the sample reached 690°C. Subsequently, the sample was held at 690°C for one hour, followed by cooling the sample at a cooling rate of 55°C/h or less until its temperature reached 300°C or lower. Note that in the above-mentioned SR annealing treatment, the temperature increase rate and cooling rate for the sample in a temperature range of 300°C or lower did not affect the effect of exhibiting desired properties, and thus these rates were not defined.

(Evaluation)

(Composition of Weld metal)

The composition of the weld metal obtained after the SR treatment in each sample was examined at its central part as shown in Fig. 2.

(Evaluation of Tensile Characteristics)

Tensile specimens (in conformity with JIS Z3111 A1) were taken from a central part of the weld metal in each sample along a weld line direction as shown in Fig. 3, followed by a tensile test. In the tensile test, three tensile specimens were taken from each sample and an average of their tensile strengths (TS) as well as an average of their yield stresses (YS) were determined.

In this example, samples having a tensile strength of 700 MPa or more were rated as having "high strength".

(Evaluation of Low-temperature Toughness)

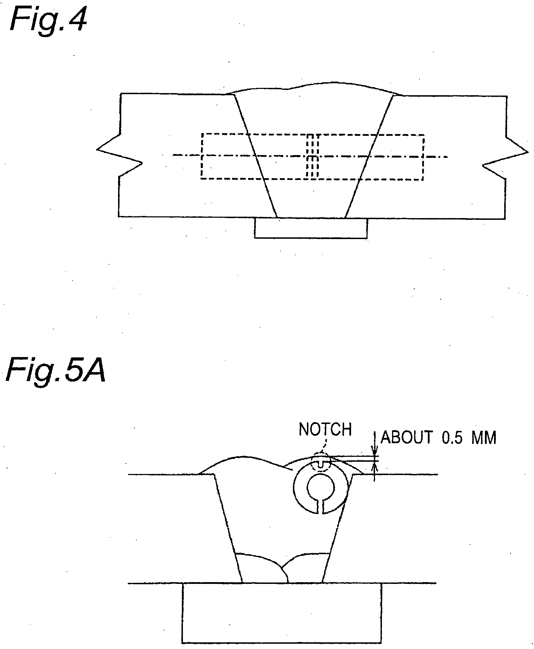

Charpy impact specimens(in conformity with JIS Z3111 No. 4) were taken vertically from a central part of the weld metal in each sample along the weld line direction as shown in Fig. 4, followed by a Charpy impact test to measure an absorption energy at 0°C. In the Charpy impact test, three Charpy impact specimens were taken from each sample and an average of absorption energies measured was calculated to determine a Charpy impact value ($vE_0$).

In this example, samples having a $vE_0$ of 40 J or more were rated as having "excellent low-temperature toughness".

(Evaluation of SR Cracking Resistance)

In evaluation of the SR cracking resistance, a tubular specimen was taken out from the steel plate obtained directly after the welding, and a ring cracking test was performed on the specimen as follows.

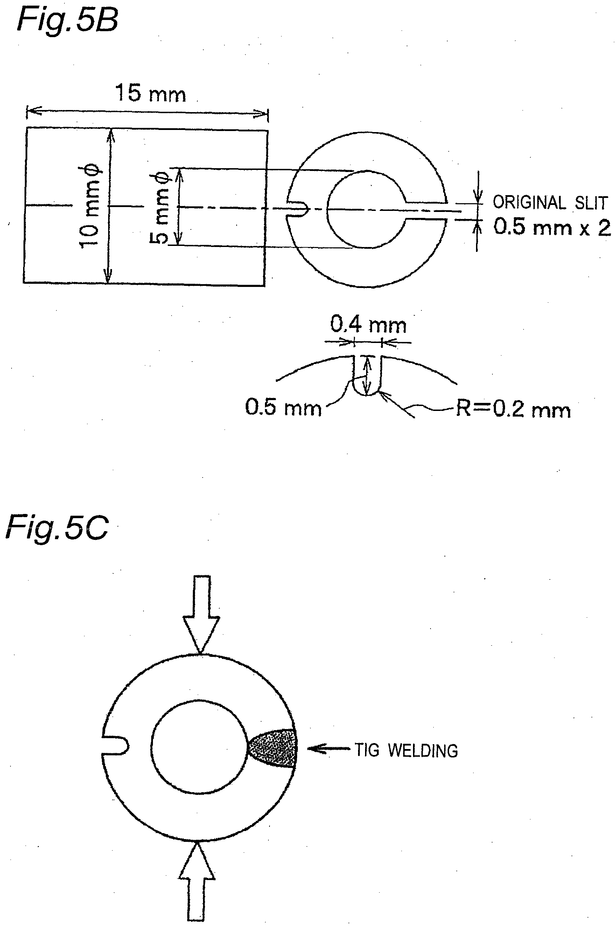

More specifically, as shown in Fig. 5A, the ring cracking specimen with a slit width of 0. 5 mm was taken out from the position of the final pass (base material) of a weld metal 3 such that a material in the vicinity of the bottom of a U-notch was tailored to match the composition of the base material. Fig. 5B illustrates the detailed shape of the above-mentioned ring cracking specimen. As shown in Fig. 5B, the ring cracking specimen had a U-notch and a slit leading to an internal cavity of the cylinder. The U notch was a U-shaped groove with a depth of 0. 5 mm, a width of 0.4 mm and a curvature radius R of the bottom of 0.2 mm.

Then, the ring cracking test was performed using the above-mentioned ring cracking specimen.

The ring cracking test was performed with reference to "Research on stress relief annealing cracking (Report 2)" (Uchiki et al, journal of the Japan Welding Society, vol. 33, No. 9 (1964), p. 718). More specifically, as shown in Fig. 5C, TIG welding was performed on the ring cracking specimen without using filler metal while pressing and shrinking the specimen to reduce the slit width (0.5 mm) into 0.05 mm by applying a bending stress to the ring cracking specimen in the direction indicated by the arrows. In this way, a load of a tensile residual stress was imposed on the bottom of the U notch.

The specimens obtained after the TIG welding were subjected to two types of SR treatments below.

Heating at 625°C for 10 hours, followed by cooling in a furnace (i.e. SR treatment under the normal condition)
Heating at 690°C for one hour, followed by cooling in the furnace (i.e.. SR treatment under a high-temperature condition)

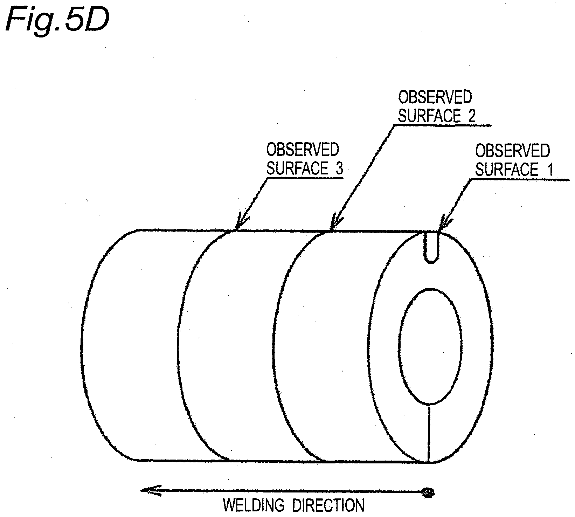

Thereafter, as shown in Fig. 5D, the specimen was divided into three pieces, and the cross-section of each piece (near the bottom of the U-notch) was observed by an optical microscope at a magnification of 100x to examine the occurrence of SR cracking. In this example, regarding all 6 specimens (= 3 observed surfaces x tests repeated twice), weld metals with no cracks in the vicinity of the bottom of the notch were rated as having excellent (good) SR cracking resistance, and any weld metals having even one crack was rated as having inferior (bad) SR cracking resistance.

These results are collectively shown in Table 4.

[Table 1]

| Wire No. | Chemical component (% by mass, with the balance being iron and inevitable impurities) | | | | | | | | | | | | | |
| --- | --- | --- | --- | --- | --- | --- | --- | --- | --- | --- | --- | --- | --- | --- |
| | C | Si | Mn | Cr | Mo | Ti | B | N | Nb | V | P | S | 13C+Cr+160B | Mg |
| W1 | 0.10 | 0.63 | 1.01 | 2.51 | 0.93 | 0.08 | 0.0004 | 0.0088 | 0.013 | 0.023 | 0.006 | 0.006 | 3.9 | 0.7 |
| W2 | 0.10 | 0.63 | 1.05 | 2.52 | 0.98 | 0.10 | 0.0008 | 0.0085 | 0.017 | 0.024 | 0.008 | 0.007 | 4.0 | 0.6 |
| W3 | 0.10 | 0.63 | 1.05 | 2.60 | 0.99 | 0.11 | 0.0004 | 0.0085 | 0.018 | 0.023 | 0.007 | 0.006 | 4.0 | 0.7 |
| W4 | 0.08 | 0.66 | 1.09 | 2.71 | 0.99 | 0.11 | 0.0008 | 0.0084 | 0.018 | 0.020 | 0.008 | 0.007 | 3.8 | 0.7 |
| W5 | 0.09 | 0.57 | 1.00 | 2.56 | 0.94 | 0.12 | 0.0004 | 0.0082 | 0.017 | 0.019 | 0.006 | 0.006 | 3.7 | 0.6 |
| W6 | 0.09 | 0.79 | 0.75 | 2.44 | 0.95 | 0.11 | 0.0008 | 0.0082 | 0.017 | 0.022 | 0.007 | 0.006 | 3.7 | 0.7 |
| W7 | 0.10 | 0.63 | 1.05 | 2.11 | 0.98 | 0.09 | 0.0004 | 0.0082 | 0.016 | 0.022 | 0.007 | 0.006 | 3.5 | 0.7 |
| W8 | 0.10 | 0.63 | 1.05 | 2.89 | 0.98 | 0.09 | 0.0018 | 0.0082 | 0.019 | 0.023 | 0.009 | 0.005 | 4.5 | 0.7 |
| W9 | 0.09 | 0.61 | 1.00 | 2.56 | 0.97 | 0.04 | 0.0006 | 0.0085 | 0.017 | 0.023 | 0.007 | 0.007 | 3.8 | 0.7 |
| W10 | 0.09 | 0.60 | 0.88 | 2.44 | 0.94 | 0.09 | 0.0004 | 0.0059 | 0.016 | 0.020 | 0.008 | 0.006 | 3.6 | 0.7 |
| W11 | 0.06 | 0.50 | 0.88 | 2.44 | 1.00 | 0.07 | 0.0004 | 0.0094 | 0.013 | 0.039 | 0.008 | 0.010 | 3.3 | 0.7 |
| W12 | 0.15 | 0.64 | 1.03 | 2.53 | 0.94 | 0.08 | 0.0005 | 0.0085 | 0.017 | 0.023 | 0.007 | 0.006 | 4.6 | 0.6 |
| W13 | 0.09 | 1.03 | 1.04 | 2.52 | 0.95 | 0.09 | 0.0004 | 0.0085 | 0.017 | 0.022 | 0.008 | 0.006 | 3.7 | 0.6 |
| W14 | 0.09 | 0.60 | 0.44 | 2.47 | 0.92 | 0.11 | 0.0004 | 0.0088 | 0.018 | 0.022 | 0.009 | 0.007 | 3.7 | 0.7 |
| W15 | 0.09 | 0.59 | 1.48 | 2.54 | 0.93 | 0.08 | 0.0004 | 0.0087 | 0.019 | 0.023 | 0.007 | 0.005 | 3.7 | 0.7 |
| W16 | 0.09 | 0.63 | 1.00 | 1.89 | 1.04 | 0.06 | 0.0004 | 0.0082 | 0.014 | 0.020 | 0.006 | 0.005 | 3.1 | 0.7 |
| W17 | 0.08 | 0.61 | 1.00 | 3.72 | 0.98 | 0.07 | 0.0002 | 0.0091 | 0.014 | 0.019 | 0.007 | 0.006 | 4.7 | 0.7 |
| W18 | 0.10 | 0.60 | 1.00 | 2.48 | 0.51 | 0.06 | 0.0000 | 0.0093 | 0.013 | 0.018 | 0.008 | 0.006 | 3.8 | 0.7 |
| W19 | 0.10 | 0.61 | 1.00 | 2.67 | 1.53 | 0.07 | 0.0002 | 0.0099 | 0.017 | 0.022 | 0.007 | 0.007 | 4.0 | 0.7 |
| W20 | 0.09 | 0.60 | 1.00 | 2.89 | 1.02 | 0.01 | 0.0002 | 0.0080 | 0.016 | 0.024 | 0.008 | 0.006 | 4.1 | 0.7 |
| W21 | 0.09 | 0.57 | 1.00 | 2.27 | 1.05 | 0.17 | 0.0001 | 0.0076 | 0.018 | 0.020 | 0.008 | 0.006 | 3.4 | 0.6 |
| W22 | 0.10 | 0.63 | 1.05 | 2.52 | 0.98 | 0.10 | 0.0038 | 0.0085 | 0.017 | 0.019 | 0.007 | 0.005 | 4.4 | 0.7 |
| W23 | 0.06 | 0.51 | 1.00 | 2.22 | 0.99 | 0.05 | 0.0002 | 0.0153 | 0.017 | 0.036 | 0.006 | 0.008 | 3.1 | 0.7 |
| W24 | 0.06 | 0.44 | 1.13 | 2.17 | 0.97 | 0.08 | 0.0004 | 0.0092 | 0.016 | 0.034 | 0.006 | 0.010 | 3.0 | 0.7 |

(continued)

| Wire No. | Chemical component (% by mass, with the balance being iron and inevitable impurities) | | | | | | | | | | | | | |
|---|---|---|---|---|---|---|---|---|---|---|---|---|---|---|
| | C | Si | Mn | Cr | Mo | Ti | B | N | Nb | V | P | S | 13C+Cr+160B | Mg |
| W25 | 0.10 | 0.60 | 1.00 | 2.56 | 0.97 | 0.08 | 0.0004 | 0.0088 | 0.039 | 0.019 | 0.007 | 0.006 | 3.9 | 0.7 |
| W26 | 0.10 | 0.61 | 0.88 | 2.44 | 1.00 | 0.08 | 0.0004 | 0.0091 | 0.016 | 0.078 | 0.006 | 0.006 | 3.8 | 0.7 |
| W27 | 0.10 | 0.63 | 1.00 | 2.06 | 1.04 | 0.06 | 0.0004 | 0.0082 | 0.014 | 0.020 | 0.007 | 0.005 | 3.4 | 0.7 |
| W28 | 0.13 | 0.57 | 1.00 | 3.00 | 1.04 | 0.06 | 0.0006 | 0.0082 | 0.014 | 0.022 | 0.008 | 0.006 | 4.7 | 0.7 |

[Table 2]

| Chemical component (% by mass, with the balance being iron and inevitable impurities) | | | | |
|---|---|---|---|---|
| C | Si | Mn | Cr | Mo |
| 0.10 | 0.10 | 0.60 | 2.30 | 1.00 |

[Table 3]

| Sample No. | Wire No. | Chemical component (% by mass, with the balance being iron and inevitable impurities) | | | | | | | | | | | | | |
|---|---|---|---|---|---|---|---|---|---|---|---|---|---|---|---|
| | | C | Si | Mn | Cr | Mo | Ti | B | N | O | Nb | V | P | S | 13C+Cr+160B |
| 1 | W1 | 0.08 | 0.44 | 0.8 | 2.3 | 0.91 | 0.048 | 0.0003 | 0.0075 | 0.05 | 0.012 | 0.02 | 0.007 | 0.006 | 3.3 |
| 2 | W2 | 0.08 | 0.44 | 0.8 | 2.3 | 0.96 | 0.060 | 0.0007 | 0.0072 | 0.05 | 0.015 | 0.02 | 0.008 | 0.006 | 3.4 |
| 3 | W3 | 0.08 | 0.44 | 0.8 | 2.3 | 0.97 | 0.065 | 0.0003 | 0.0072 | 0.05 | 0.016 | 0.02 | 0.007 | 0.006 | 3.4 |
| 4 | W4 | 0.06 | 0.46 | 0.9 | 2.4 | 0.97 | 0.065 | 0.0007 | 0.0071 | 0.05 | 0.016 | 0.02 | 0.009 | 0.007 | 3.3 |
| 5 | W5 | 0.07 | 0.40 | 0.8 | 2.3 | 0.92 | 0.073 | 0.0003 | 0.0070 | 0.04 | 0.015 | 0.02 | 0.007 | 0.007 | 3.3 |
| 6 | W6 | 0.07 | 0.55 | 0.6 | 2.2 | 0.93 | 0.064 | 0.0007 | 0.0070 | 0.05 | 0.015 | 0.02 | 0.007 | 0.006 | 3.2 |
| 7 | W7 | 0.08 | 0.44 | 0.8 | 1.9 | 0.96 | 0.056 | 0.0003 | 0.0070 | 0.05 | 0.014 | 0.02 | 0.007 | 0.006 | 3.0 |
| 8 | W8 | 0.08 | 0.44 | 0.8 | 2.6 | 0.96 | 0.056 | 0.0015 | 0.0070 | 0.05 | 0.017 | 0.02 | 0.009 | 0.005 | 3.9 |
| 9 | W9 | 0.07 | 0.43 | 0.8 | 2.3 | 0.95 | 0.025 | 0.0005 | 0.0072 | 0.06 | 0.015 | 0.02 | 0.008 | 0.007 | 3.3 |
| 10 | W10 | 0.07 | 0.42 | 0.7 | 2.2 | 0.92 | 0.052 | 0.0003 | 0.0050 | 0.05 | 0.014 | 0.02 | 0.008 | 0.007 | 3.2 |
| 11 | W11 | 0.05 | 0.35 | 0.7 | 2.2 | 0.98 | 0.042 | 0.0003 | 0.0080 | 0.04 | 0.012 | 0.04 | 0.008 | 0.011 | 2.9 |
| 12 | W12 | 0.12 | 0.45 | 0.8 | 2.3 | 0.92 | 0.045 | 0.0004 | 0.0072 | 0.05 | 0.015 | 0.02 | 0.007 | 0.007 | 3.9 |
| 13 | W13 | 0.07 | 0.72 | 0.8 | 2.3 | 0.93 | 0.054 | 0.0003 | 0.0072 | 0.05 | 0.015 | 0.02 | 0.009 | 0.006 | 3.2 |
| 14 | W14 | 0.07 | 0.42 | 0.4 | 2.2 | 0.90 | 0.063 | 0.0003 | 0.0075 | 0.05 | 0.016 | 0.02 | 0.009 | 0.006 | 3.2 |
| 15 | W15 | 0.07 | 0.41 | 1.2 | 2.3 | 0.91 | 0.047 | 0.0003 | 0.0074 | 0.04 | 0.017 | 0.02 | 0.007 | 0.005 | 3.2 |
| 16 | W16 | 0.07 | 0.44 | 0.8 | 1.7 | 1.02 | 0.038 | 0.0003 | 0.0070 | 0.06 | 0.013 | 0.02 | 0.007 | 0.005 | 2.7 |
| 17 | W17 | 0.06 | 0.43 | 0.8 | 3.4 | 0.96 | 0.040 | 0.0002 | 0.0077 | 0.05 | 0.013 | 0.02 | 0.007 | 0.005 | 4.2 |
| 18 | W18 | 0.08 | 0.42 | 0.8 | 2.2 | 0.50 | 0.035 | 0.0000 | 0.0079 | 0.05 | 0.012 | 0.02 | 0.008 | 0.006 | 3.3 |
| 19 | W19 | 0.08 | 0.43 | 0.8 | 2.4 | 1.50 | 0.040 | 0.0002 | 0.0084 | 0.06 | 0.015 | 0.02 | 0.007 | 0.006 | 3.5 |
| 20 | W20 | 0.07 | 0.42 | 0.8 | 2.6 | 1.00 | 0.003 | 0.0002 | 0.0068 | 0.08 | 0.014 | 0.02 | 0.008 | 0.006 | 3.5 |
| 21 | W21 | 0.07 | 0.40 | 0.8 | 2.0 | 1.03 | 0.102 | 0.0001 | 0.0065 | 0.05 | 0.016 | 0.02 | 0.009 | 0.006 | 3.0 |
| 22 | W22 | 0.08 | 0.44 | 0.8 | 2.3 | 0.96 | 0.060 | 0.0032 | 0.0072 | 0.05 | 0.015 | 0.02 | 0.007 | 0.005 | 3.8 |
| 23 | W23 | 0.05 | 0.36 | 0.8 | 2.0 | 0.97 | 0.030 | 0.0002 | 0.0130 | 0.06 | 0.015 | 0.03 | 0.006 | 0.008 | 2.7 |
| 24 | W24 | 0.05 | 0.31 | 0.9 | 2.0 | 0.95 | 0.048 | 0.0003 | 0.0078 | 0.08 | 0.014 | 0.03 | 0.006 | 0.011 | 2.6 |

| Sample No. | Wire No. | Chemical component (% by mass, with the balance being iron and inevitable impurities) | | | | | | | | | | | | |
|---|---|---|---|---|---|---|---|---|---|---|---|---|---|---|
| | | C | Si | Mn | Cr | Mo | Ti | B | N | O | Nb | V | P | S | 13C+Cr+160B |
| 25 | W25 | 0.08 | 0.42 | 0.8 | 2.3 | 0.95 | 0.048 | 0.0003 | 0.0075 | 0.05 | 0.035 | 0.02 | 0.007 | 0.006 | 3.4 |
| 26 | W26 | 0.08 | 0.43 | 0.7 | 2.2 | 0.98 | 0.047 | 0.0003 | 0.0077 | 0.05 | 0.014 | 0.07 | 0.007 | 0.006 | 3.3 |
| 27 | W27 | 0.08 | 0.44 | 0.8 | 1.9 | 1.02 | 0.038 | 0.0003 | 0.0070 | 0.06 | 0.013 | 0.02 | 0.007 | 0.005 | 2.9 |
| 28 | W28 | 0.10 | 0.40 | 0.8 | 2.7 | 1.02 | 0.038 | 0.0005 | 0.0070 | 0.06 | 0.013 | 0.02 | 0.008 | 0.006 | 4.1 |

[Table 4]

| No. | Tensile characteristics | | Impact properties | SR cracking resistance | |
|-----|-----|-----|-----|-----|-----|
| | YS (MPa) | TS (MPa) | $vE_0$ (J) | 625°C x10 hr | 690°C x 1 hr |
| 1 | 698 | 786 | 64 | Good | Good |
| 2 | 679 | 770 | 49 | Good | Good |
| 3 | 690 | 775 | 51 | Good | Good |
| 4 | 682 | 773 | 46 | Good | Good |
| 5 | 667 | 761 | 45 | Good | Good |
| 6 | 654 | 742 | 55 | Good | Good |
| 7 | 677 | 764 | 44 | Good | Good |
| 8 | 690 | 774 | 45 | Good | Good |
| 9 | 658 | 757 | 56 | Good | Good |
| 10 | 653 | 735 | 55 | Good | Good |
| 11 | 632 | 721 | 78 | Bad | Good |
| 12 | 704 | 801 | 24 | Bad | Bad |
| 13 | 684 | 779 | 32 | Bad | Bad |
| 14 | 611 | 695 | 66 | Bad | Bad |
| 15 | 692 | 778 | 35 | Bad | Bad |
| 16 | 643 | 732 | 43 | Bad | Bad |
| 17 | 700 | 798 | 20 | Bad | Bad |
| 18 | 625 | 690 | 78 | Good | Good |
| 19 | 740 | 841 | 15 | Bad | Bad |
| 20 | 686 | 778 | 12 | Bad | Bad |
| 21 | 733 | 809 | 10 | Bad | Bad |
| 22 | 700 | 793 | 55 | Bad | Bad |
| 23 | 703 | 827 | 20 | Bad | Bad |
| 24 | 694 | 816 | 22 | Bad | Bad |
| 25 | 677 | 756 | 26 | Bad | Bad |
| 26 | 670 | 750 | 28 | Bad | Bad |
| 27 | 659 | 749 | 54 | Bad | Bad |
| 28 | 689 | 777 | 44 | Bad | Bad |

Based on these results, the following consideration can be made.

Sample Nos. 1 to 10 shown in Table 3 are Examples of the present invention that used flux-cored wires W1 to W10, respectively, and in which the compositions of the respective weld metals satisfied the requirements of the present invention. Thus, these samples exhibited excellent strength and low-temperature toughness, and also excellent SR cracking resistance even after being subjected to each of the SR treatments at 625°C for 10 hours and at 690°C for one hour.

In contrast, sample Nos. 11 to 28 shown in Table 3 are Comparative Examples that used flux-cored wires W11 to W28, respectively, and in which the compositions of the respective weld metals did not satisfy the requirements of the present invention. Thus, these samples had the following disadvantages.

Sample No. 11 is an example that used the wire W11 in which the C content and Si content were small, the V content was large, and the r value represented by C, Cr and B was small, thus producing a weld metal in which the C content and Si content were small, and the V content and S content were large, with the r value set small. This resulted in good SR cracking resistance under the high temperature, but in degraded SR cracking resistance under the normal condition. As can be seen from such a result, in some cases, the SR cracking resistance becomes good under a high-temperature condition, but worsens under other conditions. To exhibit the excellent SR cracking resistance under any condition, it is important to satisfy the requirements of the present invention.

Sample No. 12 is an example that used the wire W12 in which the C content was large, thereby producing a weld metal in which the C content was also large. This resulted in degraded low-temperature toughness, causing cracks under any condition, regarding the SR cracking resistance.

Sample No. 13 is an example that used the wire W13 in which the Si content was large, thereby producing a weld metal in which the Si content was also large. This resulted in degraded low-temperature toughness and SR cracking resistance under any condition.

Sample No. 14 is an example that used the wire W14 in which the Mn content was small, thereby producing a weld metal in which the Mn content was also small. This resulted in degraded strength and SR cracking resistance under any condition.

Sample No. 15 is an example that used the wire W15 in which the Mn content was large, thereby producing a weld metal in which the Mn content was also large. This resulted in degraded low-temperature toughness and SR cracking resistance under any condition.

Sample No. 16 is an example that used the wire W16 in which the r value was small, thereby producing a weld metal in which the Cr content was also small with the r value set small. This resulted in degraded SR cracking resistance under any condition.

Sample No. 17 is an example that used the wire W17 in which the Cr content was large and the r value was large, thereby producing a weld metal in which the Cr content was also large with the r value set large. This resulted in degraded low-temperature toughness and SR cracking resistance under any condition.

Sample No. 18 is an example that used the wire W18 in which the Mo content was small, thereby producing a weld metal in which the Mo content was also small. This resulted in degraded strength.

Sample No. 19 is an example that used the wire W19 in which the Mo content was large, thereby producing a weld metal in which the Mo content was also large. This resulted in degraded low-temperature toughness and SR cracking resistance under any condition.

Sample No. 20 is an example that used the wire W20 in which the Ti content was small, thereby producing a weld metal in which the Ti content was also small. This sample did not have enough deoxidation effect, so that the O content in the weld metal became large. This resulted in degraded low-temperature toughness and SR cracking resistance under any condition.

Sample No. 21 is an example that used the wire W21 in which the Ti content was large, thereby producing a weld metal in which the Ti content was also large. This resulted in degraded low-temperature toughness and SR cracking resistance under any condition.

Sample No. 22 is an example that used the wire W22 in which the B content was large, thereby producing a weld metal in which the B content was also large. This resulted in degraded SR cracking resistance under any condition.

Sample No. 23 is an example that used the wire W23 in which the C content and Si content were small, the N content was large, and the r value was small, thereby producing a weld metal in which the C content and Si content were also small and the N content was large with the r value set small. This resulted in degraded low-temperature toughness and SR cracking resistance under any condition.

Sample No. 24 is an example that used the wire W24 in which the C content and Si content were small, the S content was large, and the r value was small, thereby producing a weld metal in which the C content and Si content were also small and the S content was large with the r value set small. This sample did not have enough deoxidation effect, so that the O content in the weld metal became large. This resulted in degraded low-temperature toughness and SR cracking resistance under any condition.

Sample No. 25 is an example that used the wire W25 in which the Nb content was large, thereby producing a weld metal in which the Nb content was also large. This resulted in degraded low-temperature toughness and SR cracking resistance under any condition.

Sample No. 26 is an example that used the wire W26 in which the V content was large, thereby producing a weld metal in which the V content was also large. This resulted in degraded low-temperature toughness and SR cracking resistance under any condition.

Sample No. 27 is an example that used the wire W27 in which only the r value was small, thereby producing a weld metal in which the r value was also small. This resulted in degraded SR cracking resistance under any condition.

Sample No. 28 is an example that used the wire W28 in which the C content was large and the r value was large, thereby producing a weld metal in which the r value was also large. This resulted in degraded SR cracking resistance under any condition.

As can be seen from the result of the above-mentioned sample No. 27, even though the respective components of the weld metal individually satisfied the requirements of the present invention, the desired SR cracking resistance was not obtained when the r value defined by the present invention deviated from the range specified by the present invention. Therefore, it is confirmed that the above-mentioned r value in the present invention was a very useful index for ensuring the excellent SR cracking resistance.

The present invention includes the following aspects.

Aspect 1:

A weld metal including, in percent by mass,
C: 0.06 to 0.10%,
Si: 0.4 to 0.6%,
Mn: 0.5 to 1.0%,
Cr: 1.8 to 3.0%,
Mo: 0.8 to 1.2%,
Ti: 0.02 to 0.08%
B: 0.002% or less (including 0%),
N: 0.005 to 0.01%, and
O: 0.03 to 0.07%, with the balance being iron and inevitable impurities, wherein

the weld metal satisfies the following inequality expression (1):

$$3.0 \leq 13 \times [C] + [Cr] + 160 \times [B] \leq 4.0 \qquad (1)$$

where [C] is a C content, [Cr] is a Cr content, and [B] is a B content.

Aspect 2: The weld metal according to the aspect 1, further including, in restricted contents in percent by mass, P: 0.01% or less (excluding 0%), and S: 0.010% or less (excluding 0%).

Aspect 3: The weld metal according to the aspect 1 or 2, further including, in percent by mass, at least one element selected from the group consisting of Nb: 0.03% or less (excluding 0%), and V: 0.03% or less (excluding 0%).

Aspect 4: A welded structure including the weld metal according to any one of the aspects 1 to 3.

This application claims priority based on Japanese Patent Application No. 2014-085791, filed on April 17, 2014, the disclosure of which is incorporated by reference herein. Description of Reference Numerals

1    Base metal (Steel plate)
2    Backing metal
3    Weld metal

**Claims**

1.  A weld metal comprising, in percent by mass,
    C: 0.06 to 0.10%,
    Si: 0.4 to 0.6%,
    Mn: 0.5 to 1.0%,
    Cr: 1.8 to 3.0%,
    Mo: 0.8 to 1.2%,
    Ti: 0.02 to 0.08%
    B: 0.002% or less (including 0%),
    N: 0.005 to 0.01%, and
    O: 0.03 to 0.07%, with the balance being iron and inevitable impurities, wherein
    the weld metal satisfies the following inequality expression (1) :

$$3.0 \leq 13 \times [C] + [Cr] + 160 \times [B] \leq 4.0 \qquad (1)$$

where [C] is a C content, [Cr] is a Cr content and [B] is a B content.

2. The weld metal according to claim 1, further including, in restricted contents in percent by mass, P: 0.01% or less (excluding 0%), and S: 0.010% or less (excluding 0%).

3. The weld metal according to claim 1 or 2, further including, in percent by mass, at least one element selected from the group consisting of Nb: 0.03% or less (excluding 0%), and V: 0.03% or less (excluding 0%).

4. A welded structure comprising the weld metal according to claim 1 or 2.

*Fig.1*

*Fig.2*

*Fig.3*

*Fig.4*

*Fig.5A*

NOTCH

ABOUT 0.5 MM

## Fig.5B

15 mm

10 mmφ

5 mmφ

ORIGINAL SLIT
0.5 mm x 2

0.4 mm

0.5 mm    R=0.2 mm

## Fig.5C

TIG WELDING

## Fig.5D

OBSERVED
SURFACE 2

OBSERVED
SURFACE 3

OBSERVED
SURFACE 1

WELDING DIRECTION

## INTERNATIONAL SEARCH REPORT

| | International application No. |
|---|---|
| | PCT/JP2015/061151 |

| A. CLASSIFICATION OF SUBJECT MATTER |
|---|
| *C22C38/00*(2006.01)i, *B23K9/23*(2006.01)i, *B23K35/30*(2006.01)i, *C22C38/32* (2006.01)i, *C22C38/22*(2006.01)n |

According to International Patent Classification (IPC) or to both national classification and IPC

| B. FIELDS SEARCHED |
|---|
| Minimum documentation searched (classification system followed by classification symbols) C22C38/00-38/60, B23K35/00-35/40 |

Documentation searched other than minimum documentation to the extent that such documents are included in the fields searched

Jitsuyo Shinan Koho        1922-1996    Jitsuyo Shinan Toroku Koho    1996-2015
Kokai Jitsuyo Shinan Koho   1971-2015    Toroku Jitsuyo Shinan Koho    1994-2015

Electronic data base consulted during the international search (name of data base and, where practicable, search terms used)
DWPI(Thomson Innovation)

| C. DOCUMENTS CONSIDERED TO BE RELEVANT |
|---|

| Category* | Citation of document, with indication, where appropriate, of the relevant passages | Relevant to claim No. |
|---|---|---|
| A | JP 2007-290016 A  (Kobe Steel, Ltd.), 08 November 2007 (08.11.2007), claims 1 to 4; paragraphs [0071] to [0107] & US 2007/0253857 A1    & KR 10-2007-0105872 A & CN 101274396 A | 1-4 |
| A | JP 2004-91860 A  (Kobe Steel, Ltd.), 25 March 2004 (25.03.2004), claims 1 to 6; paragraphs [0042] to [0058] (Family: none) | 1-4 |
| A | JP 2010-110819 A  (Nippon Steel & Sumikin Welding Co., Ltd., Sumitomo Heavy Industries, Ltd.), 20 May 2010 (20.05.2010), claims 1 to 5; paragraphs [0039] to [0064] & US 2010/0092798 A1 | 1-4 |

☒ Further documents are listed in the continuation of Box C.          ☐ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search 01 July 2015 (01.07.15) | Date of mailing of the international search report 14 July 2015 (14.07.15) |
|---|---|
| Name and mailing address of the ISA/ Japan Patent Office 3-4-3,Kasumigaseki,Chiyoda-ku, Tokyo 100-8915,Japan | Authorized officer Telephone No. |

Form PCT/ISA/210 (second sheet) (July 2009)

**INTERNATIONAL SEARCH REPORT**

International application No.

PCT/JP2015/061151

C (Continuation).   DOCUMENTS CONSIDERED TO BE RELEVANT

| Category* | Citation of document, with indication, where appropriate, of the relevant passages | Relevant to claim No. |
|---|---|---|
| A | JP 3-60894 A  (Sumitomo Metal Industries, Ltd.), 15 March 1991 (15.03.1991), claims; page 5, lower left column, line 4 to page 8, upper left column, line 15 (Family: none) | 1-4 |
| A | WO 2013/077356 A1  (Kobe Steel, Ltd.), 30 May 2013 (30.05.2013), claims 1 to 4; paragraphs [0048] to [0083] & US 2014/0294491 A1    & EP 2783790 A1 & CN 103945976 A        & KR 10-2014-0084197 A | 1-4 |
| A | JP 8-39287 A  (Kawasaki Steel Corp.), 13 February 1996 (13.02.1996), paragraphs [0011] to [0014] (Family: none) | 1-4 |
| A | JP 2004-58086 A  (Kobe Steel, Ltd.), 26 February 2004 (26.02.2004), paragraphs [0036] to [0094] & US 2004/0020912 A1    & KR 10-2004-0010398 A & CN 1476953 A        & CA 2435061 A1 | 1-4 |
| A | JP 10-128576 A  (Kobe Steel, Ltd.), 19 May 1998 (19.05.1998), claims 1 to 4 (Family: none) | 1-4 |
| A | JP 63-2592 A  (Kobe Steel, Ltd.), 17 January 1988 (17.01.1988), claims; page 7, upper right column, line 3 to page 16, upper left column, line 7 (Family: none) | 1-4 |

Form PCT/ISA/210 (continuation of second sheet) (July 2009)

## REFERENCES CITED IN THE DESCRIPTION

**Patent documents cited in the description**

- JP 2007290016 A
- JP 3842707 B
- JP 2014085791 A

**Non-patent literature cited in the description**

- **UCHIKI et al.** Research on stress relief annealing cracking (Report 2). *journal of the Japan Welding Society,* 1964, vol. 33 (9), 718